Europäisches Patentamt

European Patent Office

Office européen des brevets

(11) Veröffentlichungsnummer: **0 229 965 B1**

(12) **EUROPÄISCHE PATENTSCHRIFT**

(45) Veröffentlichungstag der Patentschrift: **25.03.92**

(21) Anmeldenummer: **86117000.9**

(22) Anmeldetag: **06.12.86**

(51) Int. Cl.5: **G02B 26/08**, G02B 5/08, G02B 5/12, G02B 26/06

(54) **Retromodulator.**

(30) Priorität: **22.01.86 DE 3601764**

(43) Veröffentlichungstag der Anmeldung:
**29.07.87 Patentblatt 87/31**

(45) Bekanntmachung des Hinweises auf die
Patenterteilung:
**25.03.92 Patentblatt 92/13**

(84) Benannte Vertragsstaaten:
**DE FR GB IT**

(56) Entgegenhaltungen:
EP-A- 0 100 275
WO-A-85/05464
DE-C- 3 230 159
US-A- 3 514 182

JOURNAL OF OPTICAL SOCIETY OF AMERI-
CA, Band 69, Nr. 1, Januar 1979, Seiten
181-187, Optical Society of America; S.A. KO-
KOROWSKI: "Analysis of adaptive optical
elements made from piezolectric bimorphs"

JOURNAL OF OPTICAL SOCIETY OF AMERI-
CA, Band 69, Nr. 3, März 1979, Seiten
478-481, Optical Society of America; E.

STEINHAUS et al.: "Bimorph piezoelectric
flexible mirror"

(73) Patentinhaber: **Messerschmitt-Bölkow-Blohm
Gesellschaft mit beschränkter Haftung
Robert-Koch-Strasse
W-8012 Ottobrunn(DE)**

(72) Erfinder: **Sepp, Gunther, Dr.
H.-Löns-Strasse 10
W-8012 Ottobrunn(DE)**
Erfinder: **Born, Gunthard, Dr.
Donarweg 22
W-8000 München 83(DE)**

## Beschreibung

Die Erfindung bezieht sich auf einen Retromodulator in Form eines Tripelspiegels gemäß dem Oberbegriff des Patentanspruchs 1.

Retromodulatoren werden beispielsweise für die Übertragung von Daten benötigt, bei denen senderseitig nur ein begrenzter Energievorrat zur Verfügung steht, der eine Abstrahlung von Signalen hoher Leistung nicht ermöglicht. Dies ist beispielsweise bei Satelliten, militärischen Flugkörpern, Überwachungsstationen etc. der Fall. Durch die Verwendung eines Retromodulators kann wie folgt vorgegangen werden: Der Retromodulator empfängt einen von der Abfragestation ausgehenden Lichtstrahl, moduliert diesen mit den zu übertragenden Daten und reflektiert den Lichtstrahl zu der Abfragestation zurück. (Hierbei wird unter Licht ein Spektralbereich verstanden, der beispielsweise von 0,3 bis 20 $\mu$m reicht.)

Ein Retromodulator gemäß dem Oberbegriff des Patentanspruchs 1 ist beispielsweise aus der DE-PS 32 30 159 bekannt. Bei diesem Retromodulator besteht der Tripelspiegel aus zwei festen durchgehenden Spiegelflächen und einer Spiegelfläche, die aus einem Muster von Spiegelflächenelementen zusammengesetzt ist. An der Rückseite eines Teils der Spiegelflächenelemente sind Piezoelemente angebracht. Ohne eine an die Piezoelemente angelegte Spannung sind sämtliche Spiegelflächenelemente komplanar; durch eine angelegte Spannung wird der Teil der Spiegelflächenelemente, an den Piezoelemente angebracht sind, entsprechend der Spannung vorschoben, so daß sich eine Phasenmodulation der einfallenden Strahlung, die von dem Retromodulator rückreflektiert wird, ergibt.

Dieser bekannte Retromodulator erlaubt zwar eine Modulation des reflektrierten Lichts mit hoher Frequenz, sein Aufbau ist aber aufgrund der vielen einzelnen Spiegelelemente mit den zugehörigen Piezoelementen kompliziert, so daß der bekannte Retromodulator in der Herstellung teuer ist.

Darüberhinaus sind hohe Spannungen im kV-Bereich erforderlich, um Piezoauslenkungen in der Größenordnung von Mikrometern zu erzeugen.

Weiterhin ist aus der US-PS 4 216 440 ein aus piezoelektrischem Material bestehendes Prisma bekannt, auf dessen Seiten fingerförmige Elektroden aufgedampft sind. Dieses Prisma ist zwar vergleichsweise kostengünstig herzustellen, aufgrund von starken inneren Kräften sind bei diesem einstückigen Prisma aus Piezomaterial jedoch keine großen Modulationshöhen und keine hohen Modulationsfrequenzen möglich.

Der Erfindung liegt die Aufgabe zugrunde, einen Retromodulator anzugeben, der bei kostengünstigem Aufbau große Modulationshöhen und hohe Modulationsfrequenzen ermöglicht.

Eine erfindungsgemäße Lösung dieser Aufgabe ist mit Ihren Weiterbildungen in den Patentansprüchen gekennzeichnet.

Erfindungsgemäß ist mindestens eine Spiegelfläche des Tripelspiegels bzw. des Hohlwürfels als schwingungsfähige Membran ausgebildet. Die Wandlerelemente, die die elektrischen Modulationssignale in mechanische Auslenkungen umsetzen, regen die Membran zu Eigenschwingungen an.

Hierdurch ergeben sich große Auslenkungen der deformierten Spiegelfläche und damit große Modulationshöhen. Hohe Modulationsfrequenzen sind ohne weiteres durch entsprechende Auslegung der schwingungsfähigen Membran und entsprechende Wahl der Eigenschwingung erreichbar.

Da die als schwingungsfähige Membran ausgebildete Spiegelfläche des Retromodulators einstükkig ist, sind die Herstellkosten vergleichsweise gering.

Weiterbildungen der Erfindung sind in den Unteransprüchen angegeben.

Als schwingungsfähige Membran können die verschiedensten mit elektromechanischen Transducern zu Schwingungen anregbaren Membranen, beispielsweise Lautsprechermembranen etc. Verwendung finden.

Besonders vorteilhaft ist es jedoch, als schwingungsfähige Membran eine Piezofolie zu verwenden. Derartige piezoelektrische Folien, die beispielsweise aus Polyvinylidenfluorid bestehen können, haben eine hohe mechanische Stabilität und sind mit geringen Foliendicken im Bereich von einigen Mikrometern bis einigen 10 Mikrometern erhältlich, so daß sie mit sehr geringen Anregungsenergien zu Eigenschwingungen hoher Amplitude und Frequenz anregbar sind.

Die Anregung der Piezofolien kann beispielsweise gemäß Anspruch 3 dadurch erfolgen, daß an den Stellen der Eigenschwingungs-Bäuche Elektroden aufgedampft werden, an die das Modulationssignal angelegt wird.

Der eigentliche Spiegel, der den Laserstrahl reflektiert, wird ebenfalls auf die schwingungsfähige Membran aufgebracht.

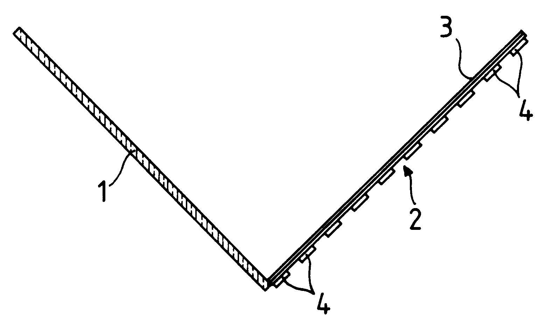

Die Erfindung wird anhand eines Ausführungsbeispiels unter Bezugnahme auf die Zeichnung näher beschrieben,
deren einzige Figur einen Querschnitt durch einen erfindungsgemäßen Retromodulator zeigt.

Der Retromodulator weist drei Spiegelflächen auf, von denen in der Figur nur die beiden Spiegelflächen 1 und 2 dargestellt sind. Die Spiegelfläche 2 ist dabei als schwingungsfähige Membran ausgebildet und besteht aus einer piezoelektrischen Folie, die auf ihrer dem Hohlwürfelinneren zugewandten Seite 3 verspiegelt ist und auf ihrer äußeren Seite mit nur schematisch dargestellten Elektroden 4 versehen ist.

Die Elektroden 4 sind derart über die Außenseite der piezoelektrischen Folie verteilt, daß sie beim Anlegen elektrischer Signale die Spiegelfläche 2 zu Eigenschwingungen anregen.

Mögliche Eigenschwingungen und damit mögliche Elektrodenverteilung sind beispielsweise in dem NASA-Report Nasa St-160 "Vibration of Plates" beschrieben. Auf dessen Inhalt wird bezüglich der Form möglicher Eigenschwingungen ausdrücklich Bezug genommen.

Die erfindungsgemäß vorgesehene Resonanzauslenkung von Spiegelflächen hat eine Reihe von Vorteilen:

- Die Resonanzauslenkung der Spiegelfläche ist um Größenordnungen größer als die übliche Piezoauslenkung: Beispielsweise wird typischerweise beim Stand der Technik, wie er beispielsweise aus der US-PS 4 216 440 bekannt ist, eine Spannung von 1 kV benötigt, um eine Piezoauslenkung von 1 $\mu$m zu erzielen. Bei der Resonanzauslenkung ergibt dagegen eine Spannung von 100 V eine Auslenkung von 0,1 mm. Damit erlaubt der erfindungsgemäße Retromodulator große Modulationshöhen.
- Da die deformierte Spiegelfläche einstückig ist, ist der erfindungsgemäße Retromodulator vergleichsweise kostengünstig herzustellen.
- Durch entsprechende Wahl der angeregten Eigenschwingungen lassen sich hohe Auslenkungen und hohe Modulationsfrequenzen erzielen.

Vorstehend ist die Erfindung anhand eines Ausführungsbeispiels beschrieben worden. Im Rahmen des allgemeinen Erfindungsgedankens - mindestens eine Fläche eines Retromodulators als schwingungsfähige Membran auszubilden, die zu Eigenschwingung angeregt wird - sind die verschiedensten Modifikationen möglich:
Beispielsweise kann mehr als eine Fläche deformierbar sein. Auch ist es möglich, verschiedene Elektrodenmuster auf die Piezofolie aufzudampfen, die unterschiedliche Eigenschwingungen anregen und je nach Bedarf von dem "Modulationssignal" angesprochen werden.

Ferner kann anstelle der vorzugsweise verwendeten Piezofolie auch eine andere schwingungsfähige Membran verwendet werden, die mit entsprechenden elektromechanischen Transducern zu Eigenschwingungen angeregt wird.

## Patentansprüche

1. Retromodulator in Form eines Tripelspiegels mit elektromechanischem Wandlerelement zur Spiegel-Flächendeformierung, durch den eine einfallende Lichtstrahlung moduliert zurückreflektierbar ist, dadurch **gekennzeichnet**, daß mindestens eine Spiegel-Fläche (2) als schwingungsfähige Membran ausgebildet ist, und daß die Wandlerelemente (4) so ausgebildet und angeordnet sind, daß sie die Membran (2) zu Eigenschwingungen anregen.

2. Retromodulator nach Anspruch 1, dadurch **gekennzeichnet**, daß die schwingungsfähige Membran eine piezoelektrische Folie ist.

3. Retromodulator nach Anspruch 2, dadurch **gekennzeichnet**, daß die schwingungsfähige Folie aus einem Fluoropolymer und insbesodere aus Polyvinylidenfluorid besteht.

4. Retromodulator nach Anspruch 2 oder 3, dadurch **gekennzeichnet**, daß auf der Rückseite der piezoelektrische Folie (2) Elektroden aufgebracht sind, deren Anzahl, Größe und Form auf die Eigenschwingungen der Membran abgestimmt sind.

5. Retromodulator nach einem Ansprüche 1 bis 4, dadurch **gekennzeichnet**, daß auf der Innenseite der schwingungsfähigen Membran eine Spiegelschicht (3) aufgebracht ist.

## Claims

1. Retro-modulator in the form of a triple mirror with electro-mechanical transducer elements for mirror-surface deformation, by means of which an entering lightbeam is modulated and reflected, characterised in that at least one mirror surface (2) is arranged as an oscillating diaphragm, and that the transducer elements (4) are constructed and arranged so as to excite the diaphragm (2) to self-oscillate.

2. Retro-modulator according to claim 1, characterised in that the oscillating diaphragm is a piezo-electrical foil.

3. Retro-modulator according to claim 2, characterised in that the oscillating foil is made of a fluoropolymer, and in particular of polyvinylidene-fluoride.

4. Retro-modulator according to claim 2 or 3, characterised in that electrodes, the number, size and form of which is matched to their own oscillation, are arranged on the rear of the piezo-electrical foil (2).

**5.** Retro-modulator according to claims 1 to 4, characterised in that a mirror layer (3) is applied to the inside of the oscillating diaphragm.

**Revendications**

**1.** Rétromodulateur se présentant sous la forme d'un miroir triple comportant un élément convertisseur électro-mécanique pour déformer la surface réfléchissante, au moyen duquel un rayon lumineux incident est modulé et réfléchi, caractérisé en ce qu'au moins une surface du miroir (2) est agencée sous la forme d'une membrane vibrante et en ce que les éléments convertisseurs (4) sont agencés et disposés de manière telle qu'ils excitent des vibrations propres dans la membrane (2).

**2.** Rétromodulateur selon la revendication 1, caractérisé en ce que la membrane vibrante est une film piézo-électrique.

**3.** Rétromodulateur selon la revendication 2, caractérisé en ce que le film vibrant est constitué d'un polymère fluoré et en particulier de poly (fluorure de vinylidène).

**4.** Rétromodulateur selon la revendication 2 ou 3, caractérisé en ce que des électrodes sont disposées sur la face arrière du film piézo-électrique (2), électrodes dont le nombre, la taille et la forme sont adaptés aux vibrations propres de la membrane.

**5.** Rétromodulateur selon l'une des revendication 1 à 4, caractérisé en ce qu'une couche réfléchissante (3) est appliquée sur la face interne de la membrane vibrante.